# EUROPEAN PATENT APPLICATION

(11) **EP 2 273 217 A2**
(43) Date of publication of application: **12.01.2011**
(21) Application number: 10164801.2
(22) Date of filing: 03.06.2010
(51) Int. Cl.: F25D 13/06

(54) **Refrigeration system**

(30) Priority: 12.06.2009 FI 20095659
(71) Applicant: Vulganus Oy, 15550 Nastola (FI)
(72) Inventor: Lehtinen, Lassi, 16100 Uusikylä (FI)
(74) Representative: Heikkinen, Esko Juhani

(57) **Abstract**

The invention relates to a refrigeration system for the cooling of goods in a closable and refrigerable space (1) inside a building, said space featuring a conveyor (5) for carrying and concurrently refrigerating goods (7) to be refrigerated, refrigeration means (2) for cooling said space to a temperature of -5°C..-40°C, and possible means for the transfer of air within the space, the space having its walls provided with at least one goods opening (3) extending to the exterior of the space for carrying goods into and/or out of the space through said goods opening/goods openings by means of the conveyor (5). The space (1) has its walls provided with at least one air intake (4) for supplying the space with make-up air (It) and the air discharging from the space (1) by way of the goods openings (3) is replaced essentially in its entirety with fresh make-up air (It) supplied by way of the air intake/air intakes (4), the make-up air having a water content of about 3,0 - 0,01 g/m³ of make-up air, the amount of water being preferably less than 1 g/m³ of make-up air. The make-up air (It) is produced by an air transfer unit (10), which is located outside the space and which features a dryer device (150) containing a moisture absorbing material and enabling its moisture absorbing material to be regenerated, as well as an air supply duct (170) which enables passing the make-up air (It) from the building, from outside the space, or from outdoor air through the moisture absorbing material of the air dryer device (150) and further into the space by way of the air intake/air intakes (4) opening into the same, and said air supply duct being also provided with means (110) for carrying and possibly pressurizing the make-up air in the air duct, as well as with possible means (120) for the cooling of air in the air supply duct (170) and for relieving the air of condensation water produced in the cooling of air.

## Description

The invention relates to a refrigeration system as set forth in the preamble of claim 1 for the cooling of goods in a closable and refrigerable space inside a building.

The invention relates also to a method for the cooling of goods in a space inside a building by means of a refrigeration system according to claim 1.

The invention further relates to a refrigerable space inside a building and useful in the system.

Particularly in food industry, the cooling/freezing of various bakery and the like products is performed by using a refrigerable space, featuring a so-called spiral conveyor. Foodstuffs to be cooled are brought onto the spiral conveyor from a first goods opening present in a top or bottom part of the room and cooled products are discharged from a second goods opening present in a bottom or top part of the room, respectively. One major problem in such refrigeration systems has been the fact that moisture coming in through the goods openings condenses on structural elements in the space, particularly on cold making equipment, such as lamellar radiators, present in the space. As frost accumulates on cold equipment, the operation of a refrigeration system must be suspended on a regular basis, for example once a day, for the removal of frost deposits on cold making equipment by melting.

The problem has been addressed e.g. by means of various cold traps fitted in goods openings. However, the problem here is that moisture, contained in the air which at this point is still warm, diffuses by way of the goods openings from outside the refrigerated space into the colder, lower moisture space. Another optional solution to the problem has been a reduction of moisture in the air contained in the space by circulating it through a moisture absorbing material and by returning the dried air back into the space being refrigerated. This type of solution does not eliminate the actual main problem, which is the penetration of moisture into a space being refrigerated and, in addition, the removal of moisture from circulated air is relatively expensive.

It is an object of the invention to eliminate the problems appearing in the foregoing prior art.

The invention is based on a surprising discovery that the above-described problems can be avoided entirely by blowing dry cooled air into the space in such an amount that the space develops an internal pressure which is equal to or higher than the pressure in those building spaces which are adjacent to the presently discussed space and into which the goods openings extend. Preferably, a slight overpressure is established inside the space by bringing cooled dry air into the space. It is imperative for the air to contain as little moisture as possible, preferably the air contains water vapor in such a small amount that it has such a low partial pressure in the air mass supplied into the space that the internal air of the space has a dew point temperature which is below the temperature of cold making equipment present in the space.

More specifically, the invention relates to a refrigeration system for the cooling of goods in a closable and refrigerable space inside a building, said space featuring a conveyor for carrying the goods to be cooled, refrigeration means for cooling said space to a temperature of -5°C.. -40°C, and possible means for the transfer of air within the space, the space having its walls provided with at least one goods opening extending to the exterior of the space for carrying goods into and/or out of the space through said goods opening/goods openings by means of the conveyor. In this case, the space has its walls provided with at least one air intake for delivering make-up air into the space, the air discharging from the space by way of the goods openings being replaced essentially in its entirety with fresh make-up air supplied by way of the air intake/air intakes, the make-up air having a water content of about 3,0 - 0,01 g/m³ of make-up air, the amount of water being preferably less than 1 g/m³ of make-up air. The make-up air is produced by an air transfer unit, which is located outside the space and which features a dryer device containing a moisture absorbing material and enabling its moisture absorbing material to be regenerated, as well as an air supply duct which enables passing the make-up air from the building, from outside the space, or from outdoor air through the moisture absorbing material of the air dryer device and further into the space by way of the air intake/air intakes opening into the same, and said air supply duct being also provided with means for carrying and possibly pressurizing the make-up air in the air duct, as well as with possible means for the cooling of air in the air supply duct.

In a preferred embodiment of the invention, the (air) dryer device is a so-called sorption dryer. The construction of sorption dryers is known as such, comprising a vertical wheel of material rotatable around its axis in circumferential direction. The material wheel consists of a moisture-absorbing material, such as silica gel, and is often coated with an antimicrobial agent, such as silver, in the event that the refrigerable space is used for handling foodstuffs or other products susceptible to microbial contamination. The moisture-bearing air, which is supplied from inside the building, from outside the space, or from outdoor air, is delivered through the material wheel. Depending on the temperature and moisture of inlet air to be drawn into the supply duct, some moisture can be removed from such air upstream of the material wheel by cooling the air and by removing condensed water. If necessary, the air can be cooled even after the material wheel has removed some moisture therefrom. This way, the air to be delivered into a refrigerable space can be demoisturized to such an extent that its content of water vapor is less than 1 g per m³ of air. The moisture absorbing material of the material wheel is possible to regenerate by spinning the wheel and by subjecting a moisture-containing material wheel segment at the same time to the pass-through of warmed-up regeneration air, which has been drawn from the building, from outside a refrigerable space, or from outdoor air.

The above-described refrigeration system enables supplying a refrigerable space with cooled dry air having such a low moisture content that its condensation on the surfaces of cold making equipment present in the space no longer constitutes a problem, and, preferably, the moisture content of the discussed air is so low that condensation does not even occur. An equally important aspect in terms of the invention is the ability to establish in a refrigerable space an overpressure or at least a pressure which is equal to that in room spaces, which are located next to the space and into which the goods openings open from the space. When the air pressure prevailing in a refrigerable space is equal to or higher than that in room spaces adjacent thereto, into which the goods openings are extending, no significant amount of moisture is able to migrate or diffuse by way of the goods opening. Another discovery in this context was that the prior art solution, in which some of the air of a refrigerable space is circulated, involves a basic problem of establishing in the space a negative pressure which enables the diffusion of moisture from room spaces, which are located next to the refrigerable space and in which the temperature and relative humidity of air are higher than those in the refrigerable space, even in the absence of an actual flow of air should occur between the rooms.

The invention relates also to a method for the cooling of goods in a space inside a building by means of a refrigeration system according to claim 1. Hence, the method comprises the following steps, in which:
- a space is refrigerated to the temperature of -5°C.. -40°C,
- goods are brought from a first goods opening into the space and discharged after cooling to the outside of the space from a second goods opening by means of a conveyor present in the space,
- concurrently with cooling goods in the space, the same space is supplied by way of at least one air intake with fresh make-up air for replacing essentially in its entirety the air discharging from the space by way of the goods openings, the fresh make-up air containing water in the amount of about 3,0 - 0,01 g per m³ of air, preferably less than 1 g of water per m³ of air,
- the make-up air to be delivered into the space is produced by an air transfer unit, which is located outside the space and which includes a moisture-absorbing material containing dryer device, having its moisture-absorbing material regenerated concurrently with the delivery of make-up air through the dryer device for passage into the space, the make-up air being drawn from the building, from outside the space, or from outdoor air, and being passed through the dryer device and further into the space by way of the air intake opening into the same.

The invention relates also to a closable space inside a building and useful in the system and comprising at least one air intake for passing make-up air into said space, at least one goods opening for bringing material to be refrigerated into the space, and at least one goods opening for discharging refrigerated material from the space, a plurality of lamellar radiators for cooling the space, a possible fan/fans for the circulation of air in the space, thermally insulated walls, as well as a spiral conveyor.

In a preferred embodiment of the invention, the air transfer unit includes also a regeneration duct for passing air from outdoor air or from a building outside the space or from a section of the air supply duct preceding the material wheel through a material wheel segment to be regenerated, and said regeneration duct being further provided with means for passing the regeneration air through the material wheel segment to be regenerated, and with means for the further transfer of air outside a building or inside a building but outside the space, as well as with possible means for heating the regeneration air.

In a still further preferred embodiment of the invention, the conveyor present in refrigerable space is a spiral conveyor. The construction of a spiral conveyor is known as such and comprises a main conveyor circling in a spirally descending or ascending manner around a vertical cylindrical body member (drum), said main conveyor having its top end associated with a top carrier (top deflection end) extending outside the space through a goods opening present in an upper part of the space, and said conveyor having its bottom end associated with a bottom carrier (bottom deflection end) extending outside the space through a goods opening present in a lower part of the space.

Notable additional benefits offered by the invention include as follows: When the drying of air is conducted by using a so-called sorption dryer provided with a rotatable and regenerable wheel of material, the drying costs of air can be maintained at modest level and, at the same time, the relative humidity of air to be delivered into a refrigerable space can be brought to such a low level that the frost condensing on cold making equipment no longer constitutes a problem.

Other objectives of the invention and benefits achieved thereby will become evident from the accompanying figures representing preferred embodiments of the invention. Therein:
Fig. 1 shows a refrigerable building space in a partially cutaway view from outside the space.
Fig. 2 shows a refrigerable building space in a view from inside the space.
Fig. 3 shows a goods opening in a refrigeration system of the invention in a side view.
Fig. 4 shows schematically the air transfer unit of fig. 1.

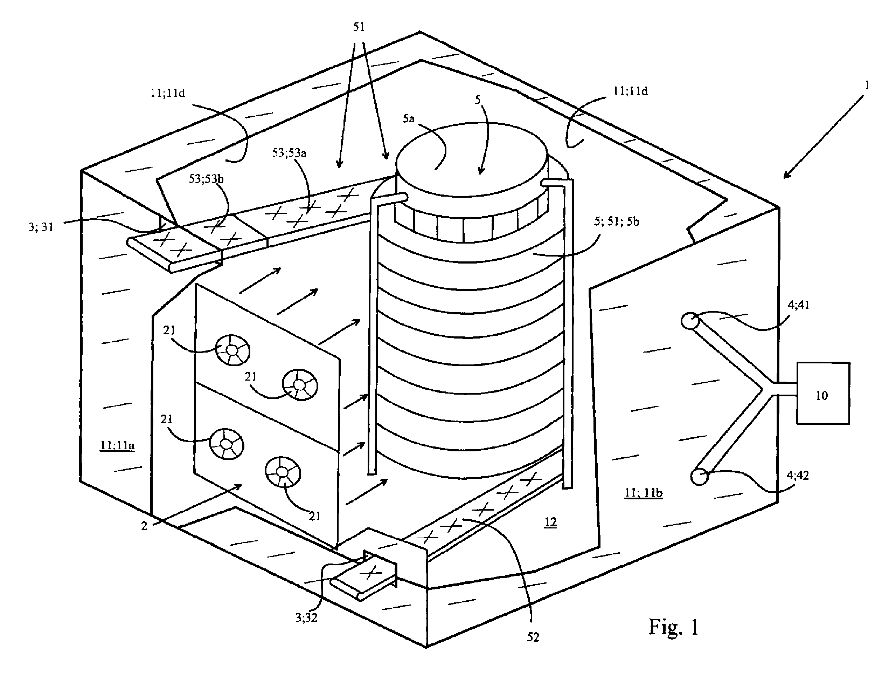

The following includes first a brief description of the inventive features visualized in figs. 1-4, as well as the principal structures visible in the figures.

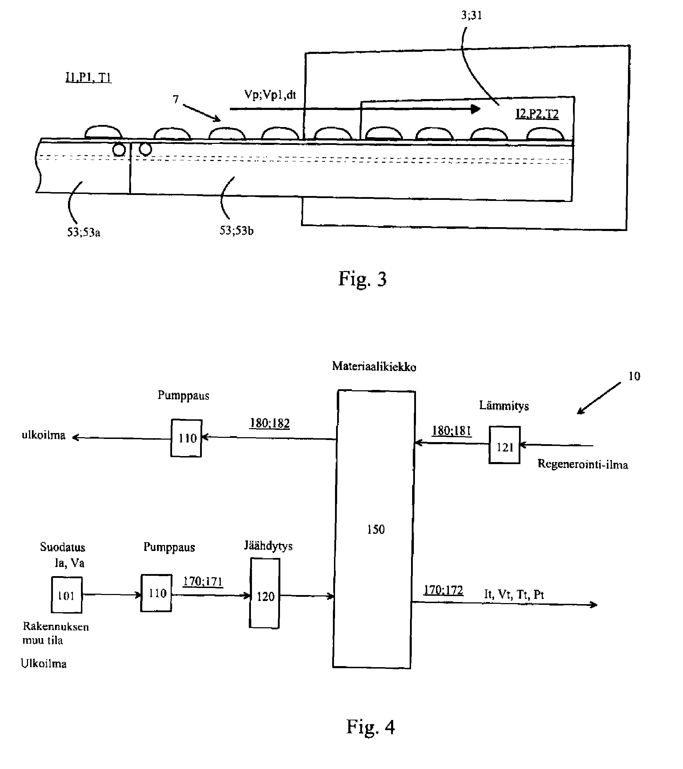

Fig. 1 shows, in a schematic representation, a refrigerable space 1 inside a building. Inside the space is visible a refrigeration unit (evaporator) 2, mounted on a wall 11; 11a and having its fans 21 blowing air towards a spiral conveyor 5. In the middle of the space stands the spiral conveyor 5, comprising a body member 5a of the spiral conveyor which is circled by a spiral-shaped main conveyor 5b, as well as by deflection ends 52, 53 (top conveyor and bottom conveyor), which are associated with the main conveyor and extend from the spiral conveyor 5 to the exterior of the space 1 by way of goods openings 3; 31 and 3; 32. The refrigerable space 1 is supplied with make-up air via air intakes 4 by means of an air transfer unit 10. The air transfer unit is shown more precisely in fig. 4.

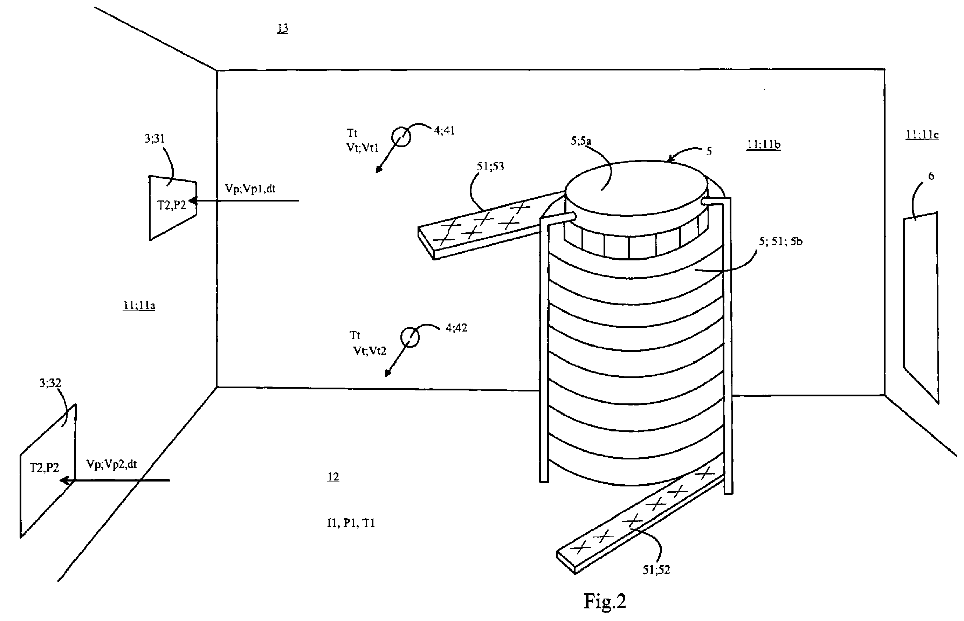

In fig. 2, the refrigerable space 1 is visible from within, without a refrigeration unit. Supported on a floor of the space is the vertical spiral conveyor 5, the sections of the deflection ends 52, 53, extending therefrom to the goods openings 3; 31, 32, having been omitted from the figure. The make-up air is supplied into the space by way of air intakes 4; 41 and 4; 42 extending through a wall 11; 11b. Through the goods openings 3 passes a given total air flow Vp for the duration of a period dt. In an air mass I1 existing inside the space prevail a temperature T1 and an air pressure P1, inducing said volume flow of air Vp through the goods openings 3 from the refrigerable space 1 into a room, which is next to this space and in which prevail a lower air pressure P2 and a higher temperature T2.

Fig. 3 serves to specify an air flow through the goods opening 3 and the air pressure P1 in the refrigerable space 1, as well as the air pressure P2 in a next room of the building, into which the goods opening opens up. Visible in fig. 3 is the upper goods opening 3; 31 of fig. 1, through which passes the top conveyor, i.e. the deflection end 53 carrying goods away from the spiral conveyor.

Fig. 4 serves to specify an air transfer unit 10. The air transfer unit 10 is used for the cooling and drying of air It (make-up air) to be supplied into the refrigerable space 1 by way of the air intakes 4. The air transfer unit includes an air supply duct 170 passing dry make-air into the space 1, a regeneration air duct 180 passing moist air obtained from the material wheel regeneration to atmosphere., as well as a wheel of material 150, which removes moisture from air drawn into the air supply duct inlet channel 170; 171 and which contains silica gel.

The invention will now be described more closely with reference to the foregoing general presentation of the invention, as well as to the figures. First studied are the features of a refrigeration system most essential from the standpoint of principal objectives of the invention.

The invention pursues to establish in the refrigerable space 1 the air pressure P1 at least equal to that existing in building rooms, which are next to it and with which the space 1 is in contact by way of the goods openings 3. Maintaining the refrigerable space 1 at the air pressure P1, which is higher than or at least equal to the air pressure P2 existing in said other premises in the building, with which the space 1 is in contact as mentioned before, serves to prevent the entrance of air and moisture carried thereby into the space 1 by diffusion through the goods opening 3 or by way of an air flow arriving in the space through the goods opening 3.

In order to enable maintaining the space 1 at an air pressure which is positive or at least equal to that existing in its adjoining premises in a direct contact from the space 1, the air It arriving in the space 1 must have a volume flow Vt which is at least equal to the volume flow Vp of air discharging therefrom. As seen from figs. 1 and 2, the refrigerable space 1 is only in contact with other premises of the building or with outdoor air by way of a closable door 6, the goods openings 3, as well as the air intakes 4. Since the only way for air to leave the space or to arrive in the space is through the goods openings 3 and the air intakes 4 when the door 6 is closed, the air It arriving by way of the air intakes 4 must have its volume flow Vt equal to or preferably higher than the volume flow Vp of air Ip exiting by way of the goods openings 3.

The air mass It, which is to be supplied into the refrigerable space 1 of a building by way of the air intakes 4, must be as dry as possible. Its temperature Tt can be roughly equal or higher than the temperature T1 of cooled air I1 present in the space 1. Moreover, the partial pressure of water vapor contained in the incoming air mass It should preferably be sufficiently low to prevent the moisture in the air space from condensing on structural elements present in the space. At the very least, the partial pressure of water vapor contained in the air mass It should in any case be maintained at such a low level that condensation e.g. on cold making equipment, whose temperature is generally lower than that of the mass present in the space, would be as slight as possible. At a dew point of -35°C, the amount of water contained in air is about 0,2 g/m³ of air, and at a dew point of -18°, the respective amount of water is about 1,05 g/m³ of air. The Applicant has discovered, however, that, when the air mass I1 present in the refrigerable space has its temperature T1 within the range of about -18°C..-35°C and, respectively, the cold making equipment 2, such as lamellar radiators, have a temperature not higher than about -40°C, it is sufficient in practice that the air It to be delivered into the space has a moisture content of not more than about 0,8 g per m³ of air, whereby significant condensation of moisture on the cold making equipment 2 does not yet occur. How much frost accumulates on cold making equipment in a given unit of time depends primarily on the surface area of cold making equipment, as well as on how much air has to be delivered into the discussed space and on what is the moisture content of the discussed air. Since the space 1 is only intended to be maintained at the air pressure P1 which is equal to or slightly higher than that in the adjoining premises which are in contact with the space 1, the result is that amounts of air Vt to be delivered into the space remain relatively small. The make-up air flow Vt to be delivered to into the space 1 can be further diminished by reducing the air flow Vp exiting from the space 1 through the goods openings 3 for example with various air curtains, wherein on either side of the goods opening is installed a fan which blows air in a direction perpendicular to the longitudinal direction of the goods opening, impeding the passage of air through the goods opening. In this context, the longitudinal direction of a gap is understood to be the gap's passing-through direction.

The air mass It to be introduced into the space 1 can be demoisturized in a per se known manner. Preferably, however, moisture is removed by means of a device, in which a second segment of the material removing moisture from air can be regenerated at the same time or almost at the same time as a first segment of the demoisturizing material is absorbing moisture in itself from air being delivered into the space 1. Preferably, such a demoisturizing device is a so-called sorption dryer. The sorption dryer is structurally known as such, reference being made in this context to the prior known technology, such as e.g. US 2004/0000152 and US 4,180,985. The sorption dryer consists of a vertical wheel, rotating slowly around its axis and containing a moisture absorbing material. The moisture absorbing material is for example silica gel, activated aluminum, a bauxite molecule screen, etc., said material being bonded to a suitable carrier. The air to be delivered into the space 1 is conducted through the first segment of the material wheel with moisture passing therefrom into the moisture absorbing material. At the same time, through the already moistened second segment of the wheel is conducted heated regeneration air with moisture passing from the moisture absorbing material into the regeneration air, said air being subsequently conducted out of the building or at least out of the space.

Prior to being conducted to the sorption dryer, the air can be pre-dried for example by cooling and by passing condensed moisture away.

In the invention, the air It to be conducted into the space 1 is always drawn from outside the space in order to enable establishing an overpressure in the actual space. The air to be conducted is drawn either from outdoor air or from another space in the same building. In the event that the air It to be conducted into the space is drawn from outside the building, it will be filtered prior to passing it to the sorption dryer.

The following description shall still study in more detail the refrigeration system shown in figs. 1-4 and the way of using it for achieving the foregoing objectives of the invention.

The space 1 visible in figs. 1 and 2 is defined by a floor 12, four thermally insulated walls 11; 11a, 11b, 11c and 11d, as well as a ceiling 13. On the floor 12 is supported a vertical spiral conveyor 5, consisting of a vertical cylindrical body member 5, 5a as well as a conveyor member 51. The conveyor member 51 comprises both a main conveyor 5b, extending spirally around the body, as well as a bottom deflection end 52 and a top deflection end 53, which are respectively connected to top and bottom ends of the main conveyor and by which the goods are respectively brought onto and carried away from the spiral conveyor.

The main conveyor 5b consists of a stationary metal frame, which extends spirally around the body member and which is a horizontal plane slightly detached from said body member. On top of the metal frame is a metal screen, which is movable through the intermediary of the body member 5a by means of friction between the metal screen and the body member 5a. The body member 5a itself can be driven by means of a gearing (not shown in the figure) present at a bottom edge of the body member 5a.

The bottom deflection end 52, used for bringing unpacked foodstuffs to be refrigerated or frozen into the (room)space 1 and further onto the main conveyor 5b, consists of a single component and penetrates into a room next to the space 1 by way of a lower goods opening 3; 32 present in the wall 11; 11a. The bottom deflection end 52 consists of a stationary frame as well as a metal screen, which travels on top of the frame and which is common to the main conveyor, the bottom deflection end, and the top deflection end.

The foodstuffs are placed on the metal screen traveling on top of the frame of the bottom deflection end 52 in the next room, arriving therefrom via the goods opening 3; 32 in the space and proceeding to a lower end of the main conveyor 5b.

The top deflection end 53, used for bringing unpacked refrigerated or frozen foodstuffs into the room, consists in turn of two interconnected frame sections 53a, 53b, on top of which travels a metal screen. The first frame section 53a of the top deflection end 53 is associated with an upper end of the main conveyor and extends to the proximity of an upper goods opening 3; 31 present in the wall 11; 11a. The second frame section 53b of the top deflection end 53 extends through the upper goods opening 3; 31 and its end face, which is directed towards the space, is in such a position relative to the first frame section 53a of the top deflection end 53 that the foodstuffs are carried effortlessly by the metal screen from the main conveyor onto the first frame section 53a of the top deflection end and further onto the second frame section 53b of the top deflection end and out of the space 1 by way of the upper goods opening 3; 31 and onwards into a room next to the space for a possible packaging operation of the foodstuffs.

On top of the metal frame of the main conveyor 5b, the frame of the bottom deflection end 52, and the frame sections 53a, 53b of the top deflection end travels the very same endless metal screen, which thereby circles from a lower part of the main conveyor's metal frame to the bottom deflection end, from the bottom deflection end back to the lower part of the main conveyor's metal frame, from an upper part of the main conveyor's metal frame to the top deflection end and from the top deflection end back to the main conveyor.

In the embodiment shown in the figures for a refrigeration system of the invention, the cold making equipment is made up of a set of refrigerators 2, mounted on the wall 11a and consisting of a number of lamellar radiators as well as air fans 21 blowing air towards the spiral conveyor. A typical temperature for the lamellar radiators of the refrigerator set is -40°C as long as it is desirable that the air mass I1 present inside the space 1 be refrigerated to a conventional freezing temperature of about -35°C.

Opening into the space 1 is also a closable door 6 as well as two air intakes 4; 41 and 4; 42 in the wall 11b. In the depicted embodiment, the number of air intakes is two, but, provided that the refrigerable space and/or the amount of air proceeding through goods openings were smaller, even a single air intake might be enough.

Fig. 3 illustrates in more detail the air flow in the vicinity of an upper goods opening 3; 31, through which extends the second frame section 53b of the top deflection end 53 for carrying frozen foodstuffs 7 from the goods opening 3; 31 into another room space on its other side, wherein exists an air pressure P2 which is lower than an air pressure P1 prevailing in the foreground space 1. The air mass It in the space 1 has been cooled to a specific temperature, such as to a temperature within the range of -18°C to -35°C. Through said goods opening 31 migrates a volume flow of air Vp; Vp1 over a given time period dt, because P2 is lower than P1. As seen from fig. 2, during the time period dt, from the upper goods opening 31 migrates a volume flow Vp1; Vp1 and from the lower goods opening 32 respectively a volume flow Vp; Vp2 into a lower pressure room space behind those gaps. Accordingly, the space 1 must be supplied at least with an air flow Vt, which is equal to or greater than a total amount of air flows Vp=Vp1+Vp2 going away from the space by way of the goods openings 3; 31 and 3; 32.

The air flow Vt, which is at least equal to Vp1+Vp2, is brought into the space by way of the air intakes 4; 41 and 4; 42 by means an air transfer unit 10 depicted in fig. 4. The air transfer unit 10 is used for cooling an air mass It to be supplied into the space 1 to a temperature T1 roughly equal to that of internal air I1, or to a temperature higher than that, for example to a temperature within the range of +5°C to 10°C. The temperature of an air mass to be fed into the space is not as critical from the standpoint of the invention as the moisture contained in the air mass; in fact, the air mass It to be fed into the space 1 should have as little moisture as possible, which is why the air It to be supplied into the space has been subjected to demoisturization by a sorption dryer 150, as well as possibly by cooling the air and by removing condensation water from the cooled air.

The sorption dryer 150 comprises a wheel of material consisting of desiccant silica gel and coated with silver for destroying micro-organisms. A supply air Ia to be dried is brought to the sorption dryer 150 by way of an inlet channel 171 of the air supply duct 170, and an air mass It dried by the sorption dryer 150 is conducted into the space by way of a dry air channel 170; 172 of the air supply duct. The air supply duct 170 has its inlet channel 171 provided, upstream of the sorption dryer's 150 material wheel, with a pumping station 110 for transferring the supply air Ia and for increasing its pressure Pt at least to match the air pressure P1 prevailing in the space 1. The inlet channel 171 has its upstream end provided with a filter 101 for filtering the supply air. The inlet channel is further provided with a cooling device 120 upstream of the dryer device 150 for cooling the supply air Ia and, if necessary, for conducting away the water condensed the cooling process. In the event that the supply air contains more moisture than 7 g/kg of air, it pays to remove a portion of the moisture by cooling the air and by removing the condensation water prior to demoisturizing the air with the actual dryer device 150. The moist supply air Ia is conducted by way of the inlet channel 171 to a first sector of the slowly rotating, moisture absorbing material containing wheel of the dryer device 150. When conducted through a sector of the material wheel, the supply air Ia relinquishes moisture to such an extent that the supply air It to be delivered into the space 1 has a moisture content of about 0,8 g/m³ of air in its volume flow Vt. The slowly rotating material wheel of the dryer device 150 has a second sector thereof regenerated at the same time as the supply air Ia is conducted through its first sector. The regeneration is carried out by conducting heated regeneration air by way of a regeneration duct 180 through the second sector of the material wheel. The regeneration duct 180 has its inlet channel 181 supplied with regeneration air either from outdoor air or from anywhere in the building, but not, however, from the refrigerable space 1. The regeneration duct has its inlet channel 181 provided with a heater device for heating the air drawn into the channel for example to a temperature of 80°C. The heating of regeneration air flowing in the inlet channel 181 of the regeneration duct 180 is intended for increasing its moisture bonding capacity prior to passing the regeneration air through the material wheel sector to be regenerated. The moist regeneration air is conducted from the material wheel into an outlet channel 180; 182 of the regeneration duct, which is provided with a set of pumps 110 for exhausting the regeneration air to atmosphere.

Described above is just one embodiment of the invention, and it is obvious for a skilled artisan that the invention lends itself to many other implementations within the scope of protection defined in the claims.

Accordingly, the regeneration duct can also be adapted to commence from the supply air duct 170 upstream or downstream of the sorption device 150.

The goods to be refrigerated/frozen by means of the refrigeration system can be unpacked or packed foodstuffs.

Instead of a spiral conveyor, the refrigeration system according to the invention may also employ other transfer devices, such as tunnel conveyors as well as fluidized-bed conveyors, used for carrying foodstuffs in cold storage/freezer facilities.

## Claims

1. A refrigeration system for the cooling of goods in a closable and refrigerable space (1) inside a building, said space featuring a conveyor (5) for carrying goods (7) to be refrigerated, refrigeration means (2) for cooling said space to a temperature of -5°C..-40°C, and possible means for the transfer of air within the space, the space having its walls provided with at least one goods opening (3) extending to the exterior of the space for carrying goods into and/or out of the space through said goods opening/goods openings by means of the conveyor (5), **characterized in that**
- the space (1) has its walls provided with at least one air intake (4) for supplying the space with make-up air (It),
the air discharging from the space (1) by way of the goods openings (3) can be replaced essentially in its entirety with fresh make-up air (It) supplied by way of the air intake/air intakes (4), the make-up air having a water content of about 3,0 - 0,01 g/m³ of make-up air, the amount of water being preferably less than 1 g/m³ of make-up air,
- the make-up air (It) can be produced by an air transfer unit (10), which is located outside the space and which features a dryer device (150) containing a moisture absorbing material and enabling its moisture absorbing material to be regenerated, as well as an air supply duct (170) which enables passing the make-up air (It) from the building, from outside the space, or from outdoor air through the moisture absorbing material of the air dryer device (150) and further into the space by way of the air intake/air intakes (4) opening into the same, and said air supply duct being also provided with means (110) for carrying and possibly pressurizing the make-up air in the air duct, as well as with possible means (120) for the cooling of air in the air supply duct (170) and for relieving the air of condensation water produced in the cooling of air.

2. A refrigeration system as set forth in claim 1, **characterized in that** the dryer device (150) is a sorption dryer, comprising a rotatable, moisture absorbing material containing wheel which is provided with an antimicrobial agent, such as silver, and that the air supply duct has its inlet provided with air filtering means (101).

3. A refrigeration system as set forth in claim 2, **characterized in that** the air transfer unit (10) includes also a regeneration duct (180), which enables conducting air from atmosphere or from a building outside the space or from a section of the air supply duct (170) located upstream or downstream of the air dryer device (150) through a regenerable segment of the material wheel, and which regeneration duct (180) is further provided with means (110) for the transfer of air out of a building, into a building outside the space, as well as with means (121) for heating the regeneration air.

4. A refrigeration system as set forth in any of the preceding claims, **characterized in that** the conveyor (5) is a spiral conveyor, comprising a frame for a main conveyor (5b), which frame extends spirally around a vertical cylindrical body member (5a) and with whose top section is functionally associated a first deflection end (53) whose frame extends through the goods opening (3; 31) located in an upper part of the space, and with a bottom section of the frame for said main conveyor (5b) is functionally associated a second deflection end (52) whose frame extends beyond the space through the goods opening (3; 32) located in an upper part of the space, an endless metal screen being carried on top of the main conveyor's (5b) frame as well as on top of the top and bottom deflection ends' (52, 53) frames.

5. A refrigeration system as set forth in claim 4, **characterized in that** the metal screen is carried by means of the rotatable body member (5a).

6. A refrigeration system as set forth in claim 1, **characterized in that** the space (1) is supplied by way of the goods openings (3) with make-up air (It) in such an amount that the space develops an air pressure (P1) which is higher than that developed in building spaces, which are present next to the discussed space and into which the goods openings (3) open up.

7. A refrigeration system as set forth in claim 6, **characterized in that** the make-up air (It) has a moisture content of 0,1 - 0,8 g/m³ when the space has an internal temperature of - 18°C..-40°C.

8. A refrigeration system as set forth in claim 1, **characterized in that** inside the space (1) is a number of fans (21) for circulating the intra-space air.

9. A refrigeration system as set forth in claim 8, **characterized in that** into the space open one or more doors (6)

10. A refrigeration system as set forth in any of the preceding claims, **characterized in that** the space is provided with at least one lamellar radiator (2) for cooling the space.

11. A method for the cooling of goods in a space inside a building by means of a refrigeration system according to claim 1, **characterized in that**
- a space (1) is refrigerated to the temperature of -5°C..-40°C,
- an item (goods) is (are) brought from a first goods opening (3; 32) into the space and discharged after cooling to the outside of the space from a second goods opening (3; 31) by means of a conveyor present in the space,
- concurrently with cooling an item/goods in the space (1), the space is supplied by way of at least one air intake (4) with fresh make-up air (It) for replacing essentially in its entirety the air discharging from the space by way of the goods openings (3), the fresh make-up air (It) containing water in the amount of about 3,0 - 0,01 g per m³ of air, preferably less than 1 g of water per m³ of air,
- the make-up air (It) to be delivered into the space is produced by an air transfer unit (10), which is located outside the space and which includes a moisture-absorbing material containing dryer device (150), having its moisture-absorbing material regenerated concurrently with the delivery of make-up air through said dryer device (150) for passage into the space, the make-up air (It) being drawn from the building, from outside the space, or from outdoor air, and being passed through the dryer device and further into the space (1) by way of the air intake (4) opening into the same.

12. A method as set forth in claim 11, **characterized in that** the make-up air (It) is dried by the sorption dryer (150), comprising a rotatable, moisture absorbing material containing wheel which is provided with an antimicrobial agent, such as silver, and that the air to be conducted to the sorption dryer (150) is filtered and possibly cooled, and the condensation water, produced by air as a result of its cooling, is separated and removed.

13. A method as set forth in claim 12, **characterized in that** the make-up air (It) is, on the one hand, drawn from outside the space (1) or from outdoor air into an air supply duct (170) and is conducted through the material wheel of the sorption dryer (150) for drying the air, and, on the other hand, the material wheel of the sorption dryer (150) is rotated and, at the same time, regeneration air drawn into a regeneration duct (180) is conducted after a possible heating period through a material wheel segment of the sorption dryer (150) to be regenerated for removing moisture from the material wheel and thereafter the regeneration air, having traveled through the material wheel, is removed into a building outside the space or outside the building itself.

14. A method as set forth in any of claims 11-13, **characterized in that** goods (7) are supplied from the first goods opening (3; 31), extending outside the space, onto the main conveyor (5b) of s spiral conveyor and discharged after refrigeration to the second goods opening (3; 32) extending outside of the space.

15. A refrigerable space (1) inside a building and useful in a refrigeration system as set forth in claim 1, **characterized in that** the space (1) has at least one air intake (4) for passing make-up air (It) into said space, at least one goods opening (3) for bringing material to be refrigerated into the space and at least one goods opening (3) for discharging material from the space, a plurality of lamellar radiators (2) for cooling the space, a possible air fan/fans for the circulation of air in the space, thermally insulated walls (11), as well as a conveyor (5).
